# EUROPEAN PATENT SPECIFICATION

(11) **EP 2 153 453 B1**
(45) Date of publication and mention of the grant of the patent: **11.01.2012**
(21) Application number: 08750281.1
(22) Date of filing: 14.05.2008
(51) Int. Cl.: H01H 71/66, H01H 83/22, H02H 7/08, H02H 7/085, H02K 11/00

(54) **AN ELECTRIC MOTOR**
ELEKTROMOTOR
MOTEUR ÉLECTRIQUE

(30) Priority: 31.05.2007 TR 200703751
(43) Date of publication of application: 17.02.2010
(73) Proprietor: Arçelik Anonim Sirketi, 34950 Istanbul (TR)
(72) Inventor: YILMAZ, Namik, 34950 Istanbul (TR); OZKAHRAMAN, Hakan, 34950 Istanbul (TR); ERENAY, Kerem, 34950 Istanbul (TR); TEZDUYAR, Latif, 34950 Istanbul (TR); SONMEZOZ, Fehmi, 34950 Istanbul (TR)
(86) International application number: PCT/EP2008/055888
(87) International publication number: WO 2008/145511

(56) References cited:
- EP-A- 1 056 180
- WO-A-2004/047137
- DE-A1- 19 916 533
- FR-A- 2 824 662
- KR-A- 20030 016 525

## Description

The present invention relates to an electric motor wherein a thermal protector is utilized against overheating, as described, for example, in documents FR2824662, WO2004047137, EP1056180 and US 3903456,

In a household appliance, for example in a washing machine, thermal protectors are utilized for the protection of electric motors against overheating and high currents that arise under conditions like the locking of the rotor. The most preferred thermal protectors are the bimetal type comprising stationary and movable parts. The bimetal thermal protector functions like an electric switch, wherein the stationary part is in contact with the movable part during normal operation of the electric motor, and when the electric motor is overheated due to overloading, the movable part is deformed with the effect of heat, losing contact with the stationary part and not allowing the flow of electric current. The thermal protector can be situated on the motor windings or anywhere the heat can be detected and is connected in series to the motor windings to stop the operation of the electric motor by cutting off the electricity in conditions of overheating and/or excessive rise in the current.

In an electric motor driven by DC current, if the thermal protector sensitive to high current and overheating is connected in series to the circuit wherein the DC current flows, for example to the motor windings, it will malfunction in a short period of time and will not be able to serve since it will be subjected to continuous high current, therefore it cannot be connected to the motor windings through which the DC current flows.

In order to solve this problem, in a brushless DC electric motor as cited in the Great Britain Patent No GB2249441, the AC supply delivered to the motor control circuit is changed to DC through a rectifier and the thermal protector is connected in series to the AC voltage line but not to the motor windings wherein the DC current flows.

The aim of the present invention is the realization of an electric motor wherein the thermal protector is prevented from damage through being affected by high currents.

The electric motor realized in order to attain the aim of the present invention is explicated in the claims.

A thermal protector, situated close to the windings or in the vicinity of the windings, is utilized for protecting the electric motor from overheating. When the temperature of the electric motor exceeds the predetermined limit value, the thermal protector cuts off the current passing through it by becoming an open circuit, maintaining to cut off the current delivered to the electric motor and to halt thereof.

The electric motor is driven by AC or DC current and is used in a household appliance like a washer/dryer. A switched mode power supply is provided in the electronic circuit controlling the electric motor which produces low value DC voltages, for example like 5V or 15V, required for operation of the electronic units in the circuit.

Single contact or double contact type phase relays connected to motor windings are used for actuating, halting or changing the direction of operation of the electric motor. The electronic units comprising the relay have to be energized for the phase relays to be operated and a low level DC voltage is sufficient for this process. The low DC voltages for energizing the relays are also received from the switched mode power supply.

In the electric motor of the present invention, the thermal protector terminals providing electrical connections of the thermal protector are connected in series to the feeder circuit that delivers the low DC feed voltages produced in the switched mode power supply to the relays in order to prevent damaging of the thermal protector by being subjected to high currents while functioning to detect the temperature.

Since the electric current passing through the thermal protector on the feeder circuit is at a low level, the thermal protector is prevented from damage. Since the thermal protector is connected in series to the relays that directly control the motor motion electrically, functions like a relay while operating, that is, at the moment it turns off the current, the relays to which it is connected change to passive mode and halt the motor.

Since the thermal protector is connected in series to the feeder circuit between the switched mode power supply and the relays, it can be easily implemented in both the three-phase brushless direct current motor and also the single phase AC or DC current electric motors that have comparatively lower costs than the brushless direct current motor.

The electric motor realized in order to attain the aim of the present invention is illustrated in the attached figures, where:

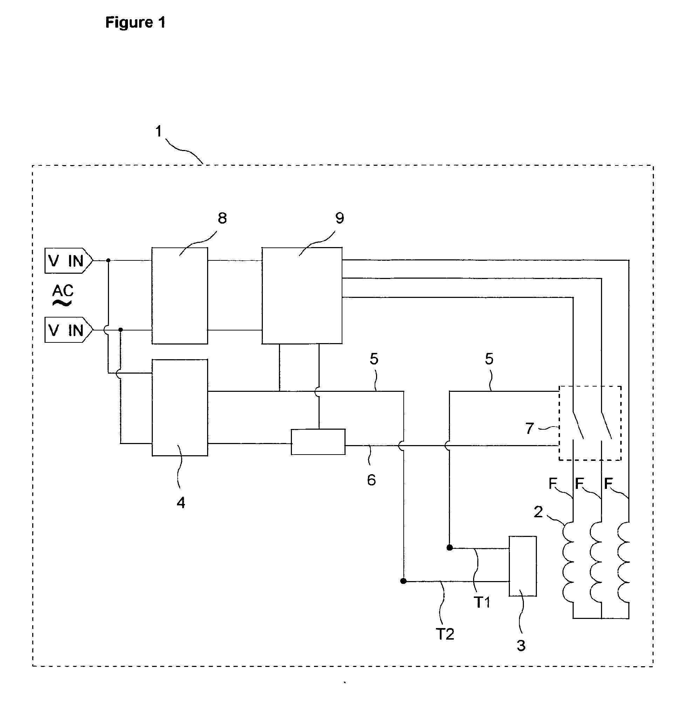

Figure 1 - is the schematic view of an electric motor.

Figure 2 - is the circuit diagram of a three-phase brushless direct current motor.

Figure 3 - is the schematic view of the relay connection in a three-phase brushless direct current motor.

Figure 4 - is the circuit diagram of a single phase AC electric motor.

Figure 5 - is the circuit diagram of a single phase AC electric motor.

The elements illustrated in the figures are numbered as follows:

1 - Electric motor

2 - Winding

3 - Thermal protector

4 - Switched mode power supply

5 - Feeder circuit

6 - Control circuit

7 - Relay

8 - Rectifier

9 - Inverter

The electric motor (1) utilized in household appliances like a washer/dryer, comprises a stator, a rotor, one or more windings (2) formed of isolated copper wire, the diameter and number of coils determined according to the desired power and rpm, a thermal protector (3) situated adjacent to the winding (2) or in the vicinity of the winding (2), having two thermal protector terminals (T1, T2) maintaining the electrical connection thereof, that cuts off the current passing through it by becoming an open circuit when the temperature exceeds a predetermined limit value and a switched mode power supply (SMPS) (4) connected to the AC main power supply, that produces more than one low value DC feeder voltages (like 5V or 15V) for energizing the electronic units.

The electric motor (1) furthermore comprises one or more feeder circuits (5) that delivers the low DC feeding voltages generated in the switched mode power supply (4) to the electronic units for energizing, one or more control circuits (6) that delivers the control signals generated by the switched mode power supply (4) to the electronic circuits by means of a microprocessor for triggering the elements such as for example the transistor, triac etc., one or more relays (7) that are energized by the low rate DC voltage received from the feeder line (5) and the control signals received from the control circuit (6)and changes to the active - passive mode for actuating, halting or changing the operational direction of the electric motor (1).

The relays (7) get ready to operate by being energized with the low DC voltage delivered from the feeder circuit (5) and change to the appropriate modes by being triggered with the signals delivered from the control circuit (6).

The electric motor (1) of the present invention, comprises a thermal protector (3) situated between the switched mode power supply (4) and the relays (7) and is connected by means of thermal protector terminals (T1, T2) to the feeder circuit (5) that delivers the low DC feeding voltages produced in the switched mode power supply (4) to the relays (7) and thus controls the operation of the relays (7) by being connected in series to the relays (7).

During the normal operation of the electric motor (1), the thermal protector (3) behaves as a short circuit and allows the current to flow through it. When the electric motor (1) temperature exceeds the limit value, the thermal protector (3) opens, not allowing the current to flow through it, thus interrupts the DC feeding current delivered from the feeder circuit (5) to which it is connected in series and prevents the DC feeding current from reaching the relays (7).

The relay (7) is in the active mode when energy is delivered and provides the electric motor (1) to operate. During the normal operation of the electric motor (1), current continues to flow normally from the feeder circuit (5) that the thermal protector (3) is connected in series and the relay (7) drives the electric motor (1) according to the signals coming from the control unit (6). The relay (7) immediately changes to the passive mode when de-energized, and does not operate the electric motor (1). In the embodiment of the present invention, when the relay (7) is energized by means of the feeder circuit (5) to which the thermal protector (3) is connected in series, that is when current is delivered from the feeder circuit (5), changes to the active mode and controls the operation of the electric motor (1) according to the relay (7) driving signals (control signals) coming from the control circuit (6). When the thermal protector (3) cuts off the DC current delivered from the feeder circuit (5) due to excessive temperature, the relay (7) changes to the passive mode by being de-energized, even though the control signals continue to be delivered from the control circuit (6), does not deliver current to the windings (2) and the electric motor (1) is not operated.

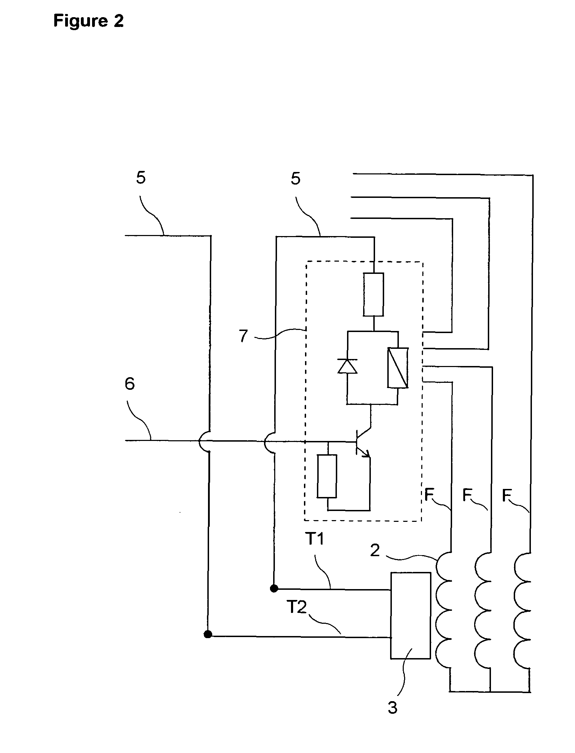

In an embodiment of the present invention, the electric motor (1) is a three-phase brushless direct current motor (BLDC) (Figure 2). In this embodiment, the electric motor (1) comprises a rectifier diode bridge (8) that converts the AC main power supply voltage to DC voltage, an inverter (9) that delivers three different phase currents, to the windings (2) on the three phases (F) of the electric motor (1) and a double contact relay (7) that separates two of the inverter (9) outlets and two phases (F) of the electric motor (1). When the thermal protector (3) becomes open circuit, the double contact relay (7) cannot be fed from the feeder circuit (5) and becomes de-energized.

Since the double contact relay (7) controls the windings (2) on the two phases (F) of the electric motor (1), when it is de-energized and changes to the passive mode, current cannot be delivered to these windings (2) and the electric motor (1) cannot be operated.

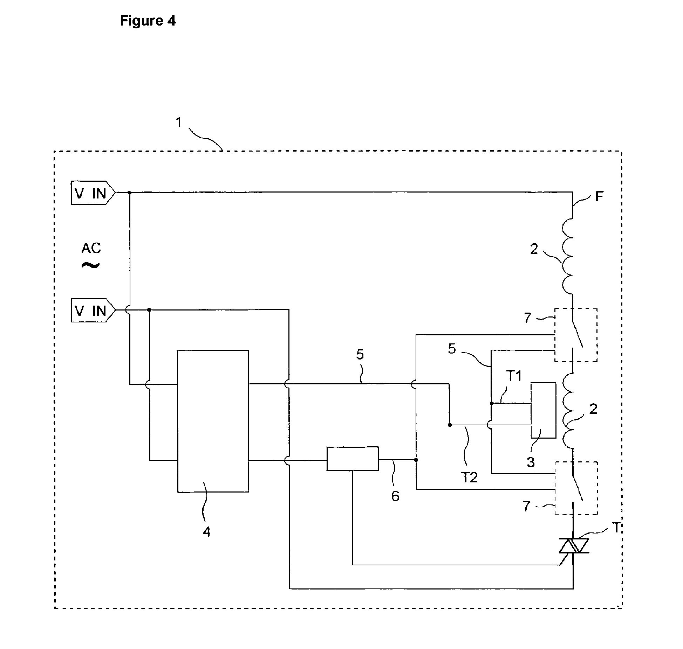

In another embodiment of the present invention, the electric motor (1) is a single phase DC motor (Figure 4). In this embodiment, the electric motor (1) comprises a rectifier diode bridge (8) that converts the AC main power supply voltage to DC voltage, a triac (T) that controls the AC voltage received from the main power supply, two single contact directional relays (7) connected in series to the stator windings (2) and the rotor windings (2) for rotating the rotor clockwise or counterclockwise by changing the current direction of the stator and rotor. When the thermal protector (3) becomes open circuit, the series connected directional relays (7) cannot be fed from the feeder circuit (5) and become de-energized. When the directional relays (7) are de-energized, they change to the mode of not operating the electric motor (1).

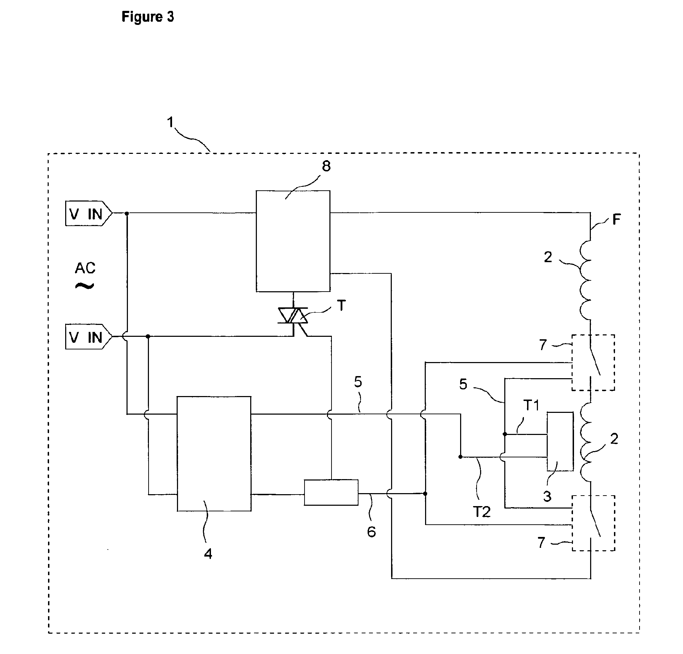

In another embodiment of the present invention, the electric motor (1) is a single phase AC electric motor (1) (Figure 3). In this embodiment, the electric motor (1) is directly driven directly by AC main power supply voltage and a triac (T) that controls the AC voltage is provided in the control circuit (6). In this embodiment as in the DC electric motor (1) of the preceding embodiment, the electric motor (1) comprises two single contact directional relays (7) connected in series to the stator windings (2) and the rotor windings (2) for rotating the rotor clockwise or counterclockwise by changing the current direction of the stator and rotor. When energy is not delivered from the feeder circuit (5) due to overheating and opening of the thermal protector (3), the relays (7) change to the passive mode and do not operate the electric motor (1).

By means of the embodiment of the present invention, particularly in places where the voltage received from the main power supply is irregular, the thermal protector (3) is not fed by the AC voltage and by the high value DC voltage delivering lines feeding the electric motor (1), instead is fed by the feeder line (5) delivering energy from the switched mode power supply (4) to the relays (7), is not subjected to high currents and current fluctuations, hence damage is prevented and a longer service life is provided.

## Claims

1. An electric motor (1) comprising a stator, a rotor, one or more windings (2), a thermal protector (3) situated adjacent to the winding (2) or in the vicinity of the winding (2), having two thermal terminals (T1, T2) maintaining the electrical connection thereof, a switched mode power supply (SMPS) (4) connected to the AC main power supply voltage , that produces more than one low value DC feeding voltages for energizing the electronic units, one or more feeder circuits (5) that delivers the low DC feeding voltages produced in the switched mode power supply (4) to the electronic units for energizing, one or more control circuits (6) that delivers the control signals generated by the switched mode power supply (4) to the electronic circuits by means of a microprocessor for triggering the elements such as the transistor, triac etc. and one or more relays (7) that are energized by the low rate DC voltage received from the feeder circuit (5), **characterized by**
- the thermal protector (3) that is connected in series by means of thermal protector terminals (T1, T2) to the feeder circuit (5) between the switched mode power supply (SMPS) (4) and the relays (7) and thus controls the operation of the relays (7)
- and that the thermal protector (3) is functioning to detect the temperature and is adapted to cut off the current passing through it when the temperature of the electric motor (1) exceeds a predetermined limit value and thus controls the operation of the relays (7)
- and that the thermal protector (3) cuts off the low DC current delivered from the feeder circuit (5) due to excessive temperature, changes the relay (7) to the passive mode by de-energizing the relay (7), even though the control signals continue to be delivered from the control circuit (6).

2. An electric motor (1) as in Claim 1, comprising the feeder circuit (5) with a transistor holding the relays (7) in closed position as long as sufficient current flows through the transistor and opening the relays (7) when the base current at the transistor drops whereby the thermal protector (3) controls the base current of the transistor.

3. An electric motor (1) as in Claim 1 and 2, that is a three-phase (F) brushless direct current motor (BLDC) **characterized by** a rectifier (8) that converts the AC main power supply voltage to DC voltage, an inverter (9) that delivers three different phase currents to the windings (2) on the three phases (F) of the electric motor (1) and a double contact relay (7) that separates two of the inverter (9) outlets and two phases (F) of the electric motor (1), the energy of which delivered from the feeder circuit (5) is cut off when the thermal protector (3) becomes open circuit.

4. An electric motor (1) as in Claim 1 and 2, that is a single phase motor and driven by DC voltage, and **characterized by** two single contact directional relays (7) connected in series to the stator windings (2) and the rotor windings (2) for rotating the rotor clockwise or counterclockwise by changing the current direction of the stator and rotor, which changes to the passive mode by not receiving energy from the feeder circuit (5) when the thermal protector (3) becomes open circuit.

5. An electric motor (1) as in Claim 1 and 2, that is a single phase motor and driven by AC main power supply voltage and **characterized by** two single contact directional relays (7) connected in series to the stator windings (2) and the rotor windings (2) for rotating the rotor clockwise or counterclockwise by changing the current direction of the stator and rotor, which changes to the passive mode by not receiving energy from the feeder circuit (5) when the thermal protector (3) becomes open circuit.

## Patentansprüche

1. Elektromotor (1), umfassend einen Stator, einen Rotor, eine oder mehrere Wicklungen (2), einen Wärmeschutz (3), der benachbart zur Wicklung (2) oder in der Nähe der Wicklung (2) angeordnet ist, aufweisend zwei Wärmeklemmen (T1, T2), die die elektrische Verbindung davon aufrechterhalten, ein Schaltnetzteil (SMPS) (4), das mit der Netzversorgungsspannung verbunden ist und mehr als eine Niederwert-Speisegleichspannungen zum Speisen der elektronischen Einheiten erzeugt, ein oder mehrere Rückkopplungskreise (5), die die Niederwert-Speisegleichspannungen, die im Schaltnetzteil(4) erzeugt werden, zum Speisen an die elektronischen Einheiten liefern, eine oder mehrere Steuerschaltungen (6), die die Steuersignale, die von dem Schaltnetzteil (4) erzeugt werden, mithilfe eines Mikroprozessors zum Auslösen der Elemente wie z. B. einem Transistor, einem Triac usw. an die elektronischen Einheiten liefert, und ein oder mehrere Relais (7), die von der Niederwert-Speisegleichspannung vom Rückkopplungskreis (5) gespeist werden, **gekennzeichnet durch**
- den Wärmeschutz (3), der mithilfe der Wärmeschutzklemmen (T1, T2) mit dem Rückkopplungskreis (5) zwischen dem Schaltnetzteil (4) und den Relais (7) in Serie geschaltet ist und auf diese Weise den Betrieb der Relais (7) steuert,
- und dass der Wärmeschutz (3) derart funktioniert, dass er die Temperatur erkennt, und dazu angepasst ist, den Strom, der **dadurch** fließt, zu unterbrechen, wenn die Temperatur des Elektromotors (1) einen vorbestimmten Grenzwert übersteigt, und auf diese Weise den Betrieb der Relais (7) steuert,
und dass der Wärmeschutz (3) den Niederwert-Gleichstrom vom Rückkopplungskreis (5) aufgrund übermäßiger Temperatur unterbricht, das Relais (7) in einen passiven Modus setzt, indem er die Speisung des Relais (7) ausstellt, obwohl weiterhin Steuersignale von der Steuerschaltung (6) geliefert werden.

2. Elektromotor (1) nach Anspruch 1, umfassend den Rückkopplungskreis (5) mit einem Transistor, der die Relais (7) in einer geschlossenen Position hält, solange ausreichend Strom durch den Transistor fließt, und die Relais (7) öffnet, wenn der Basisstrom am Transistor abfällt, wodurch der Wärmeschutz (3) den Basisstrom des Transistors steuert.

3. Elektromotor (1) nach Anspruch 1 und 2, bei dem es sich um einen dreiphasigen (F) bürstenlosen Gleichstrommotor (BLDC) handelt, **gekennzeichnet durch** einen Gleichrichter (8), der die Netzwechselspannung in Gleichspannung umwandelt, einen Umrichter (9), der auf den drei Phasen (F) des Elektromotors (1) drei unterschiedliche Phasenströme **durch** die Wicklungen (2) liefert, und ein Doppelkontaktrelais (7), das zwei der Ausgänge des Umrichters (9) und zwei Phasen (F) des Elektromotors (1) trennt, wobei die Energie desselben, die von dem Rückkopplungskreis (5) geliefert wird, unterbrochen wird, wenn der Wärmeschutz (3) ein offener Kreis wird.

4. Elektromotor (1) nach Anspruch 1 und 2, wobei es sich um einen einphasigen, mit Gleichspannung angetriebenen Motor handelt, **gekennzeichnet durch** zwei Einzelkontakt-Direktionalrelais (7), die in Serie mit den Statorwicklungen (2) und den Rotorwicklungen (2) verbunden sind, um den Rotor **durch** Ändern der Stromrichtung des Stators und des Rotors im Uhrzeigersinn oder gegen den Uhrzeigersinn zu drehen, und die in den passiven Modus wechseln, wenn sie keine Energie vom Rückkopplungskreis (5) erhalten, wenn der Wärmeschutz (3) ein offener Kreis wird.

5. Elektromotor (1) nach Anspruch 1 und 2, wobei es sich um einen einphasigen, mit Netzwechselspannung angetriebenen Motor handelt, **gekennzeichnet durch** zwei Einzelkontakt-Direktionalrelais (7), die in Serie mit den Statorwicklungen (2) und den Rotorwicklungen (2) verbunden sind, um den Rotor **durch** Ändern der Stromrichtung des Stators und des Rotors im Uhrzeigersinn oder gegen den Uhrzeigersinn zu drehen, und die in den passiven Modus wechseln, wenn sie keine Energie vom Rückkopplungskreis (5) erhalten, wenn der Wärmeschutz (3) ein offener Kreis wird.

## Revendications

1. Un moteur électrique (1) comprenant un stator, un rotor, un ou plusieurs enroulements (2), un protecteur thermique (3) qui est attenant à l'enroulement (2) ou voisin de l'enroulement (2), ayant deux bornes thermiques (T1, T2) permettant la connexion électrique de celui-là, une alimentation à découpage (SMPS) (4) reliée à l'alimentation électrique en tension alternative, qui produit plus d'une basse tension d'alimentation continue pour alimenter les unités électroniques, un ou plusieurs circuits d'alimentation (5) qui distribuent les basses tensions d'alimentation continues produites dans l'alimentation à découpage (4) aux unités électroniques pour les alimenter, un ou plusieurs circuits de commande (6) qui distribuent les signaux de commande générés par l'alimentation à découpage (4) aux circuits électroniques au moyen d'un microprocesseur pour déclencher les éléments tels que le transistor, le triac, etc., et un ou plusieurs relais (7) qui sont alimentés par la basse tension continue reçue du circuit d'alimentation (5), **caractérisé par**
- le protecteur thermique (3) qui est connecté en série au circuit d'alimentation (5) au moyen des bornes (T1, T2) du protecteur thermique entre l'alimentation à découpage (4) et les relais (7) et donc qui contrôle le fonctionnement des relais (7),
- et en ce que le protecteur thermique (3) fonctionne pour détecter la température et est adapté à couper le courant qui le traverse lorsque la température du moteur électrique (1) dépasse une valeur limite prédéterminée et ainsi contrôle le fonctionnement des relais (7),
- et en ce que le protecteur thermique (3) coupe le bas courant continu distribué par le circuit d'alimentation (5) en raison d'une température excessive, change le relai (7) en mode passif en éteignant le relai (7), même si les signaux de commande continuent à être distribués du circuit de commande (6).

2. Un moteur électrique (1) selon la Revendication 1, comprenant le circuit d'alimentation (5) avec un transistor qui tient les relais (7) en position fermé tant qu'un courant suffisant traverse le transistor, et qui active les relais (7) lorsque le courant de base sur le transistor baisse, donc le protecteur thermique (3) contrôle le courant de base du transistor.

3. Un moteur électrique (1) selon les Revendications 1 et 2, qui est un moteur à courant continu sans collecteur (BLDC) à trois phases (F), **caractérisé par** un redresseur (8) qui convertit l'alimentation électrique en tension alternative en tension continue, un onduleur (9) qui distribue des courants à trois phases aux enroulements (2) sur les trois phases (F) du moteur électrique (1) et un relai à double contact (7) qui sépare deux sorties de l'onduleur (9) et deux phases (F) du moteur électrique (1), dont l'énergie distribué du circuit d'alimentation (5) est coupée lorsque le protecteur thermique (3) devient circuit ouvert.

4. Un moteur électrique (1) selon les revendications 1 et 2, qui est un moteur monophasé et entraîné par la tension continue, et **caractérisé par** deux relai de direction à contact simple (7) connectés en série aux enroulements de stator (2) et enroulements de rotor (2) pour tourner le rotor dans le sens horaire ou antihoraire en changeant les sens de courant des stator et rotor, qui passent au mode passif en ne recevant pas l'énergie du circuit d'alimentation (5) lorsque le protecteur thermique (3) devient circuit ouvert.

5. Un moteur électrique (1) selon les revendications 1 et 2, qui est un moteur monophasé et entraîné par l'alimentation électrique en tension alternative, et **caractérisé par** deux relai de direction à contact simple (7) connectés en série aux enroulements de stator (2) et enroulements de rotor (2) pour tourner le rotor dans le sens horaire ou antihoraire en changeant les sens de courant des stator et rotor, qui passent au mode passif en ne recevant pas l'énergie du circuit d'alimentation (5) lorsque le protecteur thermique (3) devient circuit ouvert.
